# EUROPEAN PATENT APPLICATION

(11) **EP 4 424 972 A1**
(43) Date of publication of application: **04.09.2024**
(21) Application number: 23305266.1
(22) Date of filing: 28.02.2023
(51) Int. Cl.: E21B 17/01, E21B 17/10, F16L 57/00

(54) **SPACER DEVICE FOR HOLDING A CABLE IN A CENTRAL REGION OF A HOLLOW LONGITUDINAL STRUCTURE**

(71) Applicant: Nexans, 92400 Courbevoie (FR)
(72) Inventor: GJOLMESLI, Elisabeth, 0671 Oslo (NO); ADEBAYO, Adedayo, 1778 Halden (NO)
(74) Representative: Ipsilon

(57) **Abstract**

A spacer device (20) for holding a cable (22) in a central region of a hollow longitudinal structure comprising in one embodiment a spacer body (21) with a through hole (23). The distance from the through hole to the outer surface of the spacer body varies along the axial direction of the through hole and the spacer body has a region with a maximum diameter. The maximum diameter functions as a pivot point/region for the spacer device in the hollow longitudinal structure, around which the spacer device can rotate when there is relative movement between the hollow longitudinal structure and the cable. The region with maximum diameter can have a curved outer surface to facilitate the rotation and reduce wear on both the spacer device and the inner walls of the hollow longitudinal structure.

## Description

The present invention relates to a spacer device for holding a cable such as a power cable or other cable, umbilical or pipe in a central region of a hollow longitudinal structure, such as a pipe, hose, tube, etc. The invention is more particularly related to a centralizer for holding a cable centralized in a pipe, such as a J-tube.

Fatigue of submarine cables is a challenge in oil & gas and offshore wind applications, particularly where the cable transitions from the seabed to an offshore structure, e.g. a platform, wind turbine structure or sub-station. Often, the cable is protected from external loads and/or wear at this transition, e.g. by a cable protection system extending from the offshore structure to a point on the seabed or into a trench. The cable, with or without cable protection, is typically exposed to wave and current loads that induce variations in cable tension and curvature. In some instances, the offshore structure itself can induce such tension and curvature variations in the cable. A result of such variations is accumulation of fatigue damage in the cable components that eventually may lead to cable failure. One of the fatigue hot spots is often at the interface between the cable and a J-tube at the offshore structure, where a centralizer is often used to centralize the cable in the J-tube to prevent excessive wear of the cable and/or the cable protection system.

A J-tube is a conduit that has the shape of the letter "J" that is attached to the platform. A J-tube generally comprises the following elements:
- Vertical Tube
- Bottom Bend
- Bell Mouth

J-tubes support and protect cables between the bottom of the sea and the top part of the offshore structure. J-tubes provide the necessary protection of the cables and are an essential part of any offshore structure. They normally are made of steel tubes which are bent into the required J or S shape to make up the full length of a J-tube.

Also other parts of the cable and interfaces between the cable and other parts or accessories to the cable can be subjected to wear and subsequent fatigue damages in the cable components.

Centralizers are often applied to submarine power cables to avoid unfavorable loads on the cable in contact with J-tubes or similar, and/or to prevent excessive wear of the cable and/or the cable protection system, as a result of environmental loads. Cable protection systems are attached to a centralizer or a J-tube connector for the same reasons, as well as to secure them to the J-tube.

Bend stiffeners are components that are conventionally employed to support flexible pipes, umbilicals and cables when connected to offshore structures. For example, bend stiffeners are employed on cables hanging in operation from tension leg platforms (TLP), floating production vessels (FPSO), offshore wind turbines, offshore wave energy plants and so forth. These cables are subjected in operation to dynamic motions which cause cable tension and bending, potentially resulting in eventual cable failure unless bend stiffeners are employed. Thus, bend stiffeners have a purpose to distribute such curvature due to dynamic motions along a length of cable so that maximum accumulated fatigue damage due to bending is below a damage threshold in each of the cable components.

In EP2503093 it is disclosed examples of prior art bend stiffeners. One example comprises a stiffener fabricated from a robust flexible inert material, for example rubber, polyurethane, which is often of a tapered form with a central axial passage for accommodating at least one pipeline and/or cable. The tapered form renders the conventional bend stiffener stiffest at its widest end, namely its proximate end, and most flexible at its thinnest end, namely its distal end. The bend stiffener is attached to a major stationary component, for example an offshore structure, at its widest end, and the thinnest end is free to move as a distal portion of the bend stiffener. Thus, the conventional bend stiffener is often a massive conical component manufactured from polyurethane plastics material.

The object of the invention is to provide a spacer device, such as a centralizer device that overcomes the drawbacks of prior art, and more specifically a centralizer that reduces stress concentrations in the cable in the region of the centralizer/connector.

An object of the invention is also to provide a cable with a spacer device and a system with a cable and a spacer device arranged in a hollow longitudinal structure.

The object of the invention is achieved by means of the patent claims.

A spacer device for holding a cable in a hollow longitudinal structure comprises in one embodiment a spacer body with a longitudinal through hole. The radial distance from the central axis of the longitudinal through hole to the outer surface of the spacer body varies along the longitudinal direction of the through hole and the spacer body has a region with a maximum radial distance from the central axis of the longitudinal through hole to the outer surface of the spacer body. This means that the function representing the outer surface of the spacer device, ie. the shape of the outside of the spacer device has a global maximum and that there is a circumscribed circle of a cross section of the spacer body that has a maximum diameter, ie. that is larger than of any other cross section of the spacer body. The region having the maximum radial distance functions as a pivot point or pivot region for the spacer device in the hollow longitudinal structure. The spacer device can rotate around that pivot point or pivot region when there is relative movement between the hollow longitudinal structure and the cable. The region with maximum radial distance can have a curved outer surface to facilitate the rotation and reduce wear on both the spacer device and the inner walls of the hollow longitudinal structure. The spacer device can in this way hold the cable in a central region of the hollow longitudinal structure, ie. in such a way that there is a substantially equal gap between the cable and the inner walls of the hollow longitudinal structure along the length of the spacer device.

The spacer body has in some embodiments rotational symmetry around the central axis of the through hole and can for example have a spherical shape or be shaped as a bicone, where the common base of the bicone is the region with maximum diameter. The spacer body may in other embodiments have other shapes, such as having a polygon shaped cross section, pyramidic, bi-pyramidic, etc., as long as there is one cross section having a maximum diameter.

The maximum diameter of the spacer body is smaller than the inner diameter of cross section of the hollow longitudinal structure into which it is meant to be mounted. This means that the maximum radial distance from the central axis of the longitudinal through hole to the outer surface of the spacer body is less than the radius of the cross-section of the hollow longitudinal structure, or in other words, that the circumscribed circle of any cross section of the spacer body has a diameter that is smaller than the diameter of the circumscribed circle of any cross section of the longitudinal through hole.

The clearing between the spacer body and the hollow longitudinal structure can vary, as there in some situations can be advantageous that the spacer is able to move axially in the hollow longitudinal structure. Such movement can further reduce stress on the cable and the overall system.

The spacer body can be fabricated from any suitable material and is in one embodiment fabricated from a robust flexible material.

In order to install the spacer device on the cable, the spacer body comprises in one embodiment at least two body parts which can be fixed together by means of connection devices. The connection devices can be bolts and nuts or other suitable connecting means configured to securely connect two parts together.

In one embodiment, the spacer device further comprises connection means for attaching a protection system of the cable to the spacer body. Such a protection system may for example be articulated pipes, which comprises a plurality of inflexible elements which protects and stabilizes the cable.

In one embodiment, the spacer device comprises a flexible element arranged between the spacer body and the cable when the spacer device is arranged on the cable, ie. inside the through hole.

A cable with a spacer device can also be provided where the cable extends through the through hole in the spacer body of the spacer device.

In one embodiment a cable system comprises a hollow longitudinal structure, a cable, and a spacer device, for example a spacer device as described above, where the cable extends through the through hole in the spacer body of the spacer device and the spacer device is inside the hollow longitudinal structure in such a way that the through hole is substantially parallel to and can rotate relative to the longitudinal axis of the hollow longitudinal structure.

The maximum diameter of the spacer body may be smaller than the inner diameter of the hollow longitudinal structure so that the spacer body is movable in the longitudinal direction of the hollow longitudinal structure.

The hollow longitudinal structure can for example be a pipe, hose or tube and can in some embodiments comprise a bell mouth.

The invention will now be described by means of examples and by reference to the accompanying drawings.
Figure 1 shows prior art centralizers.
Figure 2 illustrates one embodiment of a spacer device.
Figure 3 illustrates another embodiment of a spacer device
Figure 4 illustrates the two embodiments of spacer device when installed in a tube with a bell mouth.
Figure 5a and 5b illustrates the two embodiments of spacer device comprising connection means for a cable protection system.

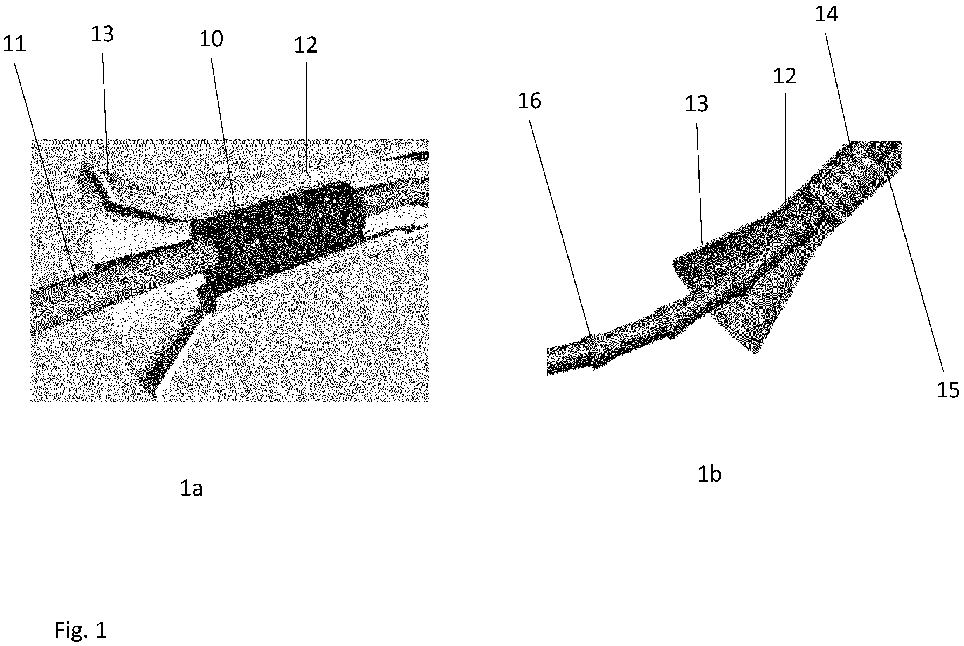

Figure 1 illustrates prior art centralizers. In figure 1a a centralizer 10 is arranged onto a cable 11 prior to installation. The cable 11 with the centralizer 10 is then pulled into a J-tube 12. The centralizer 10 ensures that the cable 11 is held along the central axis of the J-tube 12. The centralizer ensures that there is a space between the cable and the inner wall of the J-tube, and prevents the cable from touching the inside of the J-tube, thus preventing wear from friction between the cable and the J-tube. The J-tube 12 comprises a bell mouth 13 at is end portion having an expanding inner surface which allows the cable some space to avoid sharp bends at the mouth and will also let the cable deflect without touching the inner surface of the J-tube when the cable is held centrally in the tube.

Figure 1b illustrates another prior art centralizer 14, similarly installed onto a cable 15 in a J-tube 12 with a bell mouth 13. In this example the cable is further protected by a cable protection system, such as articulated pipes 16, which protects and stabilizes the cable. The cable protection system is attached to the centralizer 14, and thus in effect also connected to the J-tube 12. The illustrated cable protection system, as well as other cable protection systems and/or cable stiffeners can be used with, and in some embodiments connected to, the spacer device according to the invention.

Both these centralizers have a close fit with or is fixed to the inside of the tube they are installed in and have a rigidity over the length of the centralizer, thus subjecting the cable to bending movements at the transition area between the centralizer and the free cable. This can thus be a hot spot for fatigue in the cable, and the invention is aimed at minimizing or avoiding this problem.

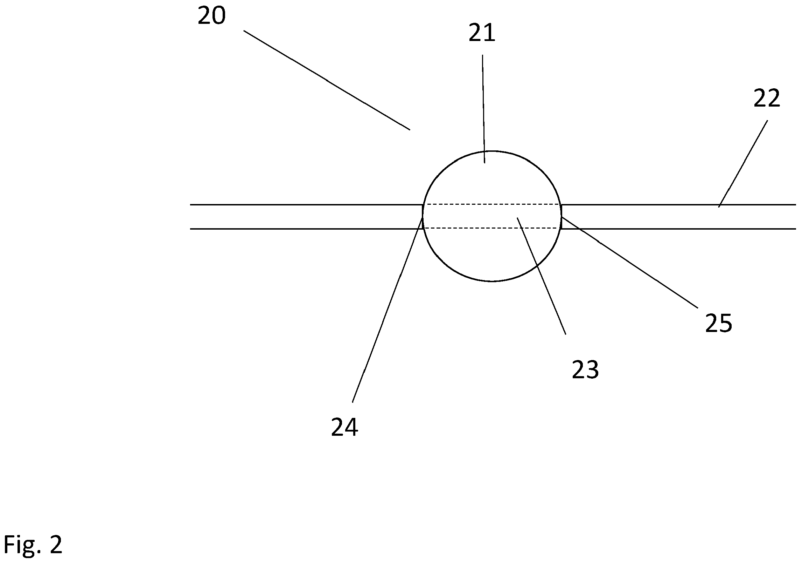

Figure 2 illustrates one embodiment of a spacer device 20 installed on a cable 22. The spacer device comprises a spacer body 21 which in this embodiment is shaped as a sphere/ball with two openings 24, 25 at opposite sides of the sphere and a cylindrical through hole 23 extending between the two openings. The cylindrical through hole 23 is thus centrally arranged in the spacer body 21.

The spacer body 21 may comprise two separate parts, so that the spacer body 21 may be divided along a plane intersecting the cylindrical through hole 23. When the spacer device 20 is installed on a cable, the two body parts can be placed on each side of the cable, and then fixed together by connecting means such as bolts, etc.

In other embodiments, the cable is pulled through the cylindrical through hole 23 of the spacer device. In this case, the spacer device 20 must be installed from a cable end.

When the spacer device 20 is installed on the cable, the cable 22 extends through the through hole 23. Between the two openings 24, 25, the diameter of the cross section of the spacer body 21 perpendicular to the through hole varies along the axial direction of the through hole, ie. following the spherical shape and thus has a region with a maximum diameter at the top of the curve that defines the sphere between the two openings. Since the spacer body 21 is spherical, the region with maximum diameter has a curved outer surface along the longitudinal direction of the through hole.

When the spacer device 20 is arranged on the cable, the cable can be kept in a central region of a hollow longitudinal structure such as a pipe, hose, tube, etc., thus keeping the cable from touching the inner walls of the hollow longitudinal structure.

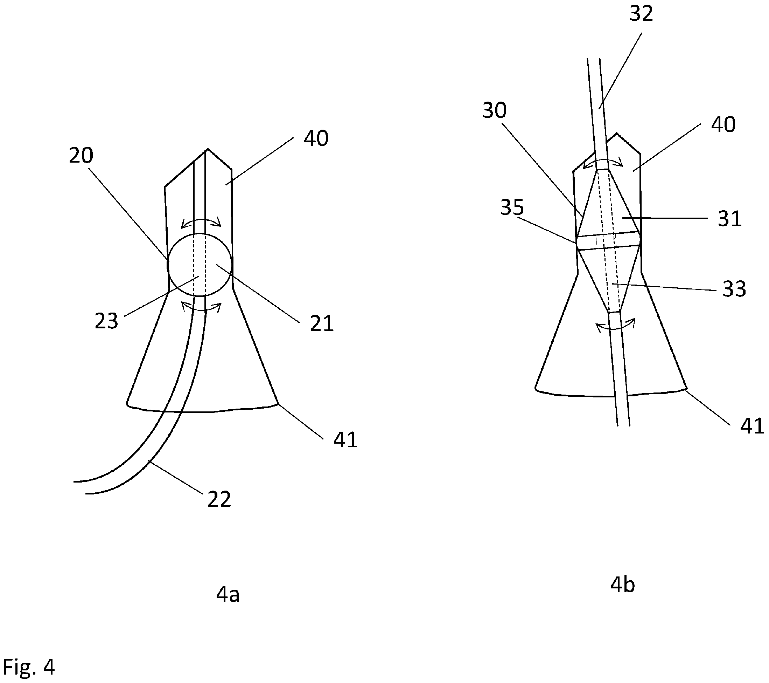

In figure 4a, it is illustrated an example of a spherical shaped spacer device 20 arranged in a tube or pipe 40 near the end opening, where the end of the tube/pipe 40 comprises a bell mouth 41. In this embodiment, the spacer device 20 has a tight fit with the tube/pipe 40, but is still able to rotate with respect to the tube/pipe 40 as indicated by the arrows.

In this way, the cable will be subjected to significant less bending stress from the spacer than without a spacer device, as the spacer and the cable together can rotate and move when there are movements of either of the cable ends relative to the other end. Also, the symmetrical nature of the spacer body ensures that the cable is held in the center of the tube, thus minimizing contact between the walls of the tube and the cable and thereby minimizing friction wear on the cable.

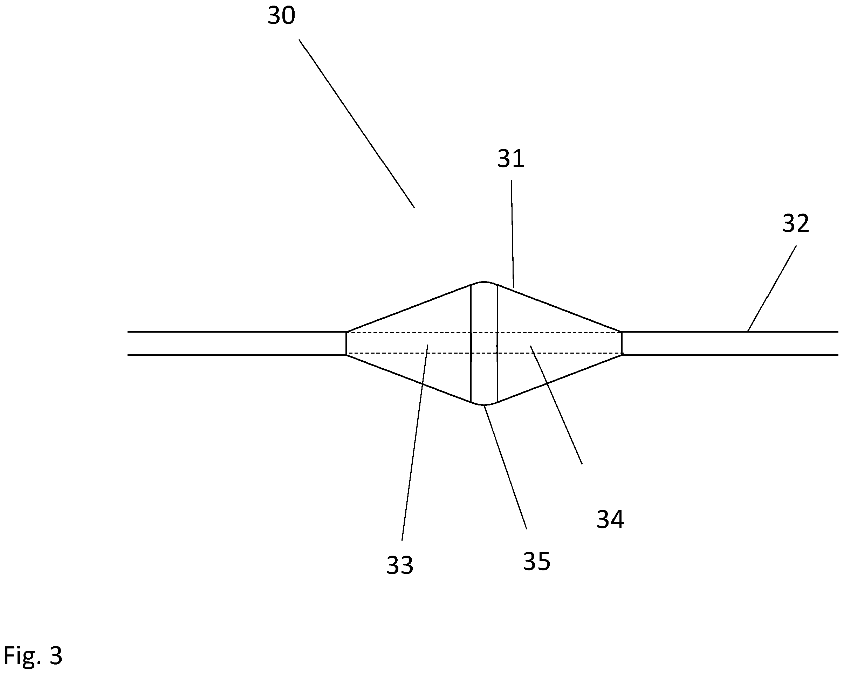

Figure 3 illustrates another embodiment of a spacer device 30, such as a centralizer.

The spacer device comprises a spacer body 31. In this embodiment, the spacer body 31 is shaped as a bicone. The bicone is the three-dimensional surface of revolution of a rhombus around one of its axes of symmetry. Equivalently, a bicone is the surface created by joining two congruent, right, circular cones at their bases.

The spacer device comprises a cylindrical through hole 33 extending along the symmetry axis and is thus centrally arranged along the length of the spacer body 31. When the spacer device 30 is installed on the cable, the cable 32 extends through the through hole 33.

The spacer body 31 may comprise two separate parts, so that the spacer body 31 may be divided along a plane intersecting the cylindrical through hole 33. When the spacer device 30 is installed on a cable, the two body parts can be placed on each side of the cable, and then fixed together by connecting means such as bolts, etc.

In other embodiments, the cable is pulled through the cylindrical through hole 33 of the spacer device. In this case, the spacer device 30 must be installed from a cable end.

Along the central axis and thus between the two openings in the spacer body, the diameter of the cross section of the spacer body 31 perpendicular to the through hole varies along the axial direction of the through hole, and has a region with a maximum diameter at the common base of the two circular cones forming the spacer body 31. The region of the common base of the two circular cones 35, is rounded to provide a smooth rotation of the spacer device when it is installed in a hollow longitudinal structure such as a pipe, hose, tube, etc.

When the spacer device 30 is arranged at the cable, the cable can be held in a central region of a hollow longitudinal structure such as a pipe, hose, tube, etc, thus keeping the cable from touching the walls of the hollow longitudinal structure. In figure 4b, it is illustrated an example of a bicone shaped spacer device 30 arranged in a tube or pipe 40 near the end opening, where the end of the tube/pipe 40 comprises a bell mouth 41. In this embodiment, the spacer device 30 has a tight fit in the region of the common base 35 with the tube/pipe 40, but as the common base region 35 is narrow, the spacer device can rotate with respect to the tube/pipe 40 as indicated by the arrows.

In this way, the cable will be subjected to less bending stress from the spacer, as the spacer and the cable together can rotate and move when there are movements of either of the cable ends relative to the other end. Also, the symmetrical nature of the spacer body 31 ensures that the cable is held in the center of the tube 40, thus minimizing contact between the walls of the tube and the cable and thereby minimizing friction wear on the cable.

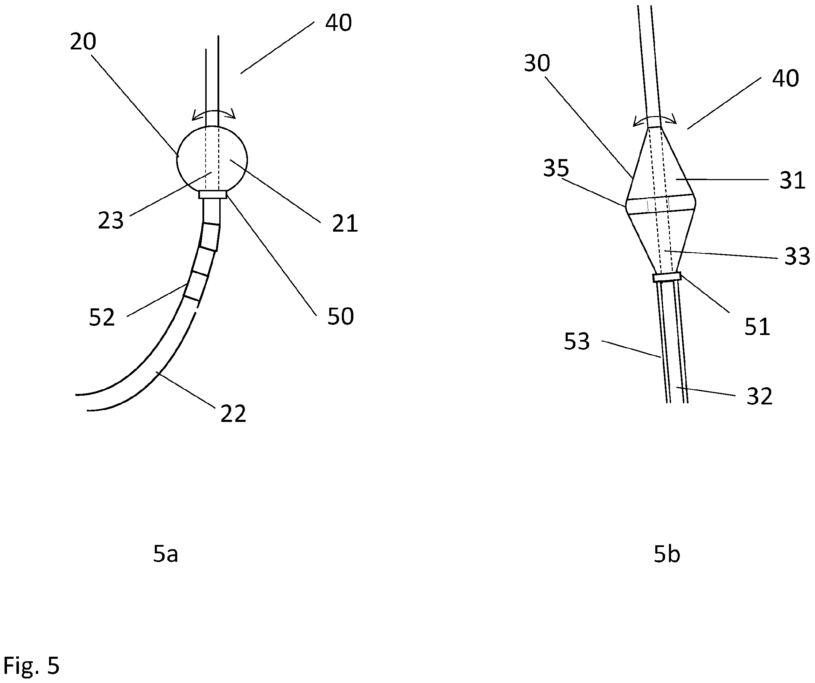

In figure 5a and 5b, the spacer devices 20, 30 further comprises connection means 50, 51 for attaching a protection system 52, 53 of the cable to the spacer body 21, 31. The cable protection system 52, 53 protects and stabilizes the cable 22, 32. The cable protection system is attached to the spacer body and adds to the bend stiffening and protection of the cable and the complete cable system. The two schematically illustrated cable protection systems, as well as other cable protection systems and/or cable stiffeners can be used with the spacer device according to the invention as well as for other locations in the cable system.

## Claims

1. A spacer device (20, 30) for holding a cable in a hollow longitudinal structure (40), where the spacer device comprises a spacer body (21, 31) with a longitudinal through hole (23, 33), where the radial distance from the central axis of the longitudinal through hole to the outer surface of the spacer body varies along the longitudinal direction of the through hole and the spacer body has a region with a maximum radial distance from the central axis of the longitudinal through hole to the outer surface of the spacer body, and where the region with maximum radial distance has a curved outer surface along the longitudinal direction of the through hole.

2. A spacer device (20) according to claim 1, where the spacer body (21) has a spherical shape.

3. A spacer device (30) according to claim 1, where the spacer body (31) is shaped as a bicone, where the common base of the bicone is the region with maximum diameter.

4. A spacer device (20,30) according to any one of the preceding claims where the spacer body (21, 31) has rotational symmetry around a central axis of the through hole (23, 33).

5. A spacer device (20, 30) according to any one of the preceding claims, where the hollow longitudinal structure (40) is cylindrical and the maximum radial distance from the central axis of the longitudinal through hole to the outer surface of the spacer body (21, 31) is smaller than the inner radius of the cross-section of the hollow longitudinal structure.

6. A spacer device (20, 30) according to any one of the preceding claims, further comprising connection means (50, 51) for attaching a cable protection system (52, 53) of the cable to the spacer body.

7. A spacer device (20, 30) according to any one of the preceding claims, where the spacer body (21, 31) comprises at least two body parts which can be fixed together by means of connection devices.

8. A spacer device (20, 30) according to claim 7, where the connection devices are bolts and nuts.

9. A spacer device (20, 30) according to any one of the preceding claims, where the spacer body is fabricated from a robust flexible material.

10. A cable with a spacer device (20, 30) according to any of the preceding claims, where the cable (22, 32) extends through the through hole (23, 33) in the spacer body (21, 31) of the spacer device.

11. A cable system comprising a hollow longitudinal structure (40), , a spacer device (20, 30) according to any of claims 1-9, and a cable (22, 32), where the cable (22, 32) extends through the through hole (23, 33) in the spacer body (21, 31) of the spacer device and the spacer device (20, 30) is inside the hollow longitudinal structure in such a way that the through hole is substantially parallel to and can rotate relative to the longitudinal axis of the hollow longitudinal structure (40).

12. A cable system according to claim 11, where the hollow longitudinal structure (40) is cylindrical and the maximum radial distance from the central axis of the longitudinal through hole to the outer surface of the spacer body (21, 31) is smaller than the inner radius of the cross-section of the hollow longitudinal structure.

13. A cable system according to claim 11 or 12, where the hollow longitudinal structure is a pipe, hose or tube.

14. A cable system according to any of claims 11 to 13, where the hollow longitudinal structure comprises a bell mouth.
